Europäisches Patentamt

European Patent Office

Office européen des brevets

(19)

(11) EP 0 871 007 A1

(12) DEMANDE DE BREVET EUROPEEN

(43) Date de publication:
14.10.1998 Bulletin 1998/42

(51) Int Cl.6: G01B 11/06

(21) Numéro de dépôt: 98420063.4

(22) Date de dépôt: 10.04.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 11.04.1997 FR 9704721

(71) Demandeur: BSN Société Anonyme
69611 Villeurbanne Cedex (FR)

(72) Inventeurs:
• Zhang, Ruo Dan
69100 Villeurbanne (FR)
• Gerard, Marc
69700 Givors (FR)

(74) Mandataire: Thibault, Jean-Marc
Cabinet Beau de Loménie
51, Avenue Jean Jaurès
B.P. 7073
69301 Lyon Cédex 07 (FR)

(54) **Procédé optique de mesure de l'épaisseur de la paroi et/ou de l'ovalisation d'un récipient et dispositif en faisant application**

(57) L'invention concerne un procédé optique de mesure de l'épaisseur (E) de la paroi (2) et/ou de l'ovalisation d'un récipient (3) au moins translucide et partiellement réfléchissant, comportant une face externe ($2_1$) et une face interne ($2_2$), le procédé consistant :

- à envoyer un faisceau lumineux incident (1) de manière qu'il forme un angle d'incidence déterminé (a) par rapport à une section droite transversale (T) du récipient,
- et à disposer un capteur de mesure (7), de façon qu'il récupère les faisceaux réfléchi (4) et réfracté (6) émis par le récipient selon deux sections droites transversales différentes (T, $T_1$).

FIG. 2

## Description

La présente invention concerne le domaine technique de l'inspection, au sens général, d'articles ou de récipients au moins translucides et partiellement réfléchissants, en vue de déceler d'éventuels défauts présentés par de tels récipients.

L'objet de l'invention concerne, plus précisément, le domaine de l'inspection de récipients visant à déterminer l'épaisseur de leur paroi, de manière à détecter, en particulier, les zones de moindre épaisseur et des défauts d'aspect. L'invention trouve une application particulièrement avantageuse dans le domaine de l'inspection de récipients en verre, de formes diverses, tels que par exemple des bouteilles ou des flacons.

Un autre objet de l'invention est de permettre de détecter également l'ovalisation de tels récipients.

Il est connu dans l'état de la technique de nombreuses méthodes optiques de mesure de l'épaisseur d'une paroi d'un récipient en verre. Ainsi, par exemple, la demande de brevet européen **EP 0 320 139** décrit un procédé optique consistant, tel que cela ressort de la **fig. 1**, à envoyer un faisceau lumineux incident **1** en un point **A** de la face externe $2_1$ de la paroi **2** d'un récipient **3**. Une partie **4** du faisceau lumineux incident **1** est réfléchie sur la surface externe $2_1$ du récipient, tandis qu'une autre partie **5** est réfractée à l'intérieur de la paroi **2**. La partie réfractée **5** est réfléchie en un point **B** sur la face interne $2_2$ du récipient et donne lieu à l'émission, en un point **C** de la face externe $2_1$ de la paroi, d'un faisceau réfracté **6**. Un capteur de mesure **7**, comportant une barrette de cellules photosensibles, est disposé dans un plan transversal **T** au récipient, perpendiculaire à l'axe de symétrie verticale ou longitudinale **X** du récipient. Le plan transversal **T** contient également le faisceau incident **1**. Le capteur de mesure **7** récupère ainsi les rayons lumineux réfléchi **4** et réfracté **6**, après que ces derniers aient traversé une lentille **8**. L'épaisseur **E** de la paroi du récipient est déterminée à partir des paramètres de mesure, tels que l'angle d'incidence <u>a</u> du faisceau incident, de la distance séparant les rayons lumineux **4, 6** émis par le récipient et aussi de l'agrandissement optique.

En faisant tourner le récipient selon son axe vertical **X**, il peut être mesuré son épaisseur sur toute sa circonférence à une hauteur donnée. Il apparaît que ce procédé présente un inconvénient majeur relatif à l'imprécision des mesures effectuées, dans la mesure où la position sur le capteur des spots lumineux créés par les rayons de réflexion directe, dépend notamment de l'état de la surface du récipient, de la forme du récipient en particulier de son ovalisation et du maintien du récipient au cours de sa rotation. Il s'ensuit inévitablement des erreurs de mesure.

Pour tenter de remédier à ces inconvénients, la demande de brevet européen **EP 0 584 673** a proposé d'orienter le faisceau lumineux par rapport à la face externe du récipient, selon un angle d'incidence déterminé. Il apparaît toutefois qu'une telle solution n'est pas satisfaisante, car les faces interne et externe du récipient ne sont généralement pas parfaitement parallèles. Le non parallélisme des face entraîne un changement des angles incidents des faisceaux et, par suite, une modification de la distance entre les faisceaux réfléchis. Il s'ensuit une erreur de mesure. Par ailleurs, la présence d'un défaut, tel qu'une aspérité, dans la paroi du récipient conduit à une déviation du faisceau réfracté et, par suite, à une erreur de mesure.

L'objet de l'invention vise donc à remédier aux inconvénients énoncés ci-dessus en proposant un procédé optique permettant de mesurer l'épaisseur de la paroi et/ou l'ovalisation d'un récipient avec une grande précision tout en offrant l'avantage de permettre une cadence de mesure élevée.

Pour atteindre cet objectif, l'objet de l'invention vise à proposer un procédé optique de mesure de l'épaisseur de la paroi et/ou de l'ovalisation d'un récipient au moins translucide et partiellement réfléchissant, comportant une face externe et une face interne, le procédé consistant :

- à envoyer un faisceau lumineux incident sur la face externe du récipient selon un angle d'incidence connu,
- à disposer à distance du récipient, un capteur de mesure composé d'une barrette de cellules photosensibles et destiné à recueillir les faisceaux réfléchi et réfracté correspondant à la réflexion du faisceau incident, respectivement sur les faces externe et interne du récipient,
- et à mesurer à l'aide du capteur, la distance séparant les faisceaux réfléchi et réfracté afin de permettre de déterminer l'épaisseur de la paroi et/ou de l'ovalisation du récipient.

Selon l'invention, le procédé consiste :

- à envoyer le faisceau lumineux incident de manière qu'il forme un angle d'incidence déterminé par rapport à une section droite transversale du récipient,
- et à disposer le capteur de mesure de façon qu'il récupère les faisceaux réfléchi et réfracté émis par le récipient selon deux sections droites transversales différentes.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue schématique d'un exemple de réalisation d'un dispositif de détection de l'état de la technique.

La **fig. 2** est une vue schématique explicitant le principe de l'invention.

La **fig. 3** est une vue partielle en coupe montrant un exemple de réalisation d'un dispositif de mesure conforme à l'invention.

La **fig. 4** est une vue en coupe transversale explicitant le principe de l'invention appliqué à la mesure de l'ovalisation d'un récipient.

La **fig. 5** est une vue d'un exemple d'application du dispositif de mesure conforme à l'invention.

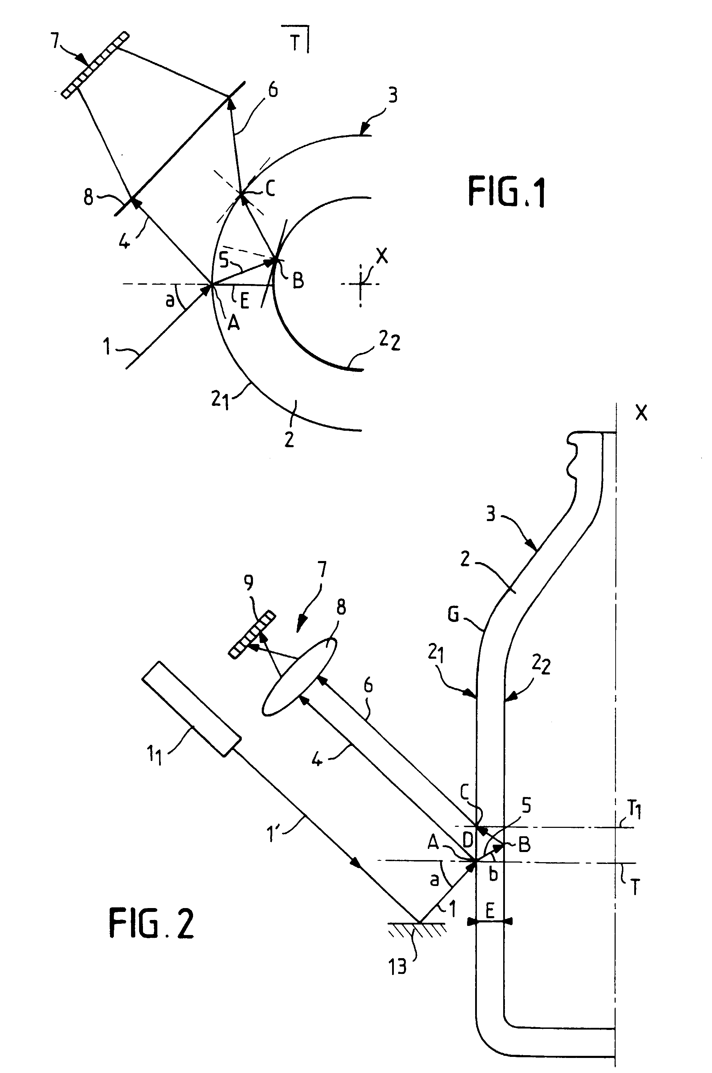

Dans l'exemple illustré à la **fig.2**, l'objet de l'invention vise à déterminer l'épaisseur **E** de la paroi **2** d'un récipient **3** au moins translucide et partiellement réfléchissant comportant une face externe $2_1$, et une face interne $2_2$. Dans l'exemple illustré, le récipient **3** présente une forme de révolution et correspond à une bouteille présentant un axe de symétrie verticale ou longitudinale **X**.

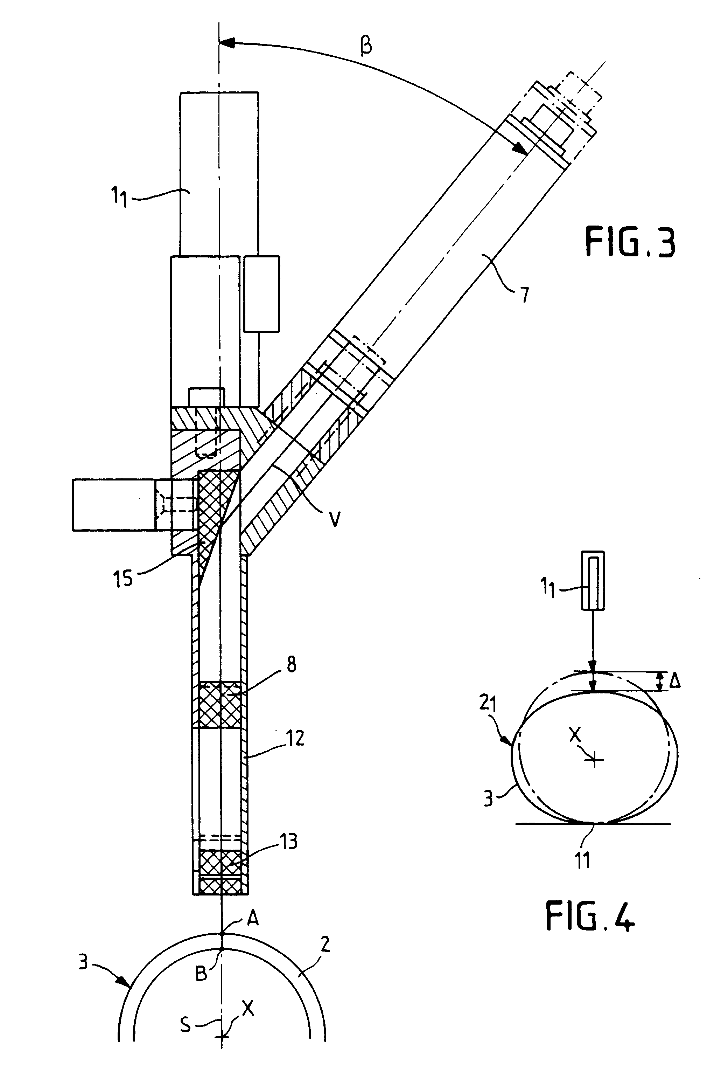

Le procédé selon l'invention consiste à envoyer un faisceau lumineux incident **1** à partir d'une source $1_1$, telle qu'un laser, en un point **A** sur la face externe $2_1$, du récipient **3**. Conformément à l'invention, le faisceau lumineux incident 1 forme un angle d'incidence <u>**a**</u> par rapport à une section droite transversale **T** du récipient ou à un plan perpendiculaire à l'axe vertical **X** et passant par le point **A**. Dans un exemple préféré de réalisation, le faisceau lumineux incident **1** est sensiblement parallèle à l'une des génératrices **G** du récipient, c'est-à-dire qu'il est situé dans un plan diamétral ou de symétrie verticale **S** passant par l'axe vertical **X**. Dans ces conditions, le faisceau incident **1**, la génératrice **G** et l'axe vertical **X** sont contenus dans le plan diamétral **S** ou de symétrie verticale du récipient **3** (**fig. 3**).

Tel que cela ressort plus précisément des **fig. 2** et **3**, une partie **4** du faisceau lumineux incident **1** est réfléchie au point **A**, sur la face externe $2_1$ du récipient, tandis qu'une autre partie **5** est réfractée à l'intérieur de la paroi **2**. La partie réfractée **5** est réfléchie en un point **B** sur la face interne $2_2$ du récipient et donne lieu à l'émission, en un point **C** de la face externe $2_1$ de la paroi ,d'un faisceau réfracté **6**.

Tel que cela ressort clairement de la **fig. 2**, les faisceaux réfléchi **4** et réfracté **6** sont émis par le récipient **2** selon deux sections transversales, respectivement **T**, $T_1$ passant par les points **A** et **C** et situées à des niveaux différents selon l'axe vertical **X**.

Le procédé selon l'invention consiste à déterminer la distance séparant les rayons lumineux réfléchi **4** et réfracté **6** par l'intermédiaire d'un capteur de mesure **7**, tel qu'une caméra linéaire comportant une lentille **8**, située en amont d'une barrette de cellules photosensibles **9**. La barrette **9** est placée dans un plan d'observation donné, de manière à récupérer les faisceaux réfléchi **4** et réfracté **6** émis par le récipient **2** selon deux sections droites transversales différentes. Le procédé consiste à mesurer la distance **D** séparant les faisceaux réfléchi **4** et réfracté **6**, de manière à permettre la détermination de l'épaisseur **E** de la paroi du récipient. En effet, l'épaisseur **E** peut être décrite de la manière suivante :

$$E = D/(2tg (b))$$

avec sin **(a) = n x sin(b)**
avec **n** l'indice de réfraction de la paroi.

Dans l'exemple de réalisation préféré, pour lequel le faisceau lumineux incident **a** est sensiblement parallèle à l'une des génératrices **G**, la barrette de mesure **9** est placée de façon à récupérer les faisceaux réfracté **6** et réfléchi **4** qui sont situés dans le plan de symétrie verticale **S**. La barrette **9** est située, de préférence, dans un plan vertical confondu ou parallèle au plan de symétrie verticale S de la bouteille. Il doit être constaté que l'épaisseur **E** peut être déterminée avec une précision relativement importante, puisque la mesure de l'épaisseur **E** de la paroi dans le plan vertical **S** permet de s'affranchir des inconvénients liés à une mesure d'épaisseur dans un plan horizontal. En effet, cette mesure dans le plan vertical permet d'éviter l'influence du rayon de courbure du récipient, de l'ovalisation du récipient et du mouvement vertical du récipient. La variation de l'angle incident **a** n'est plus liée à l'ovalisation et au changement de position du récipient, mais dépend uniquement de l'état de surface du récipient, ainsi que de la variation verticale de son profil.

Il est à noter que le procédé selon l'invention permet de déterminer l'ovalisation du récipient **3**. A cet effet et tel que cela ressort plus précisément de la **fig. 4**, le récipient **3** est animé d'un mouvement de rotation tout en restant en contact permanent avec un point d'appui **11**. Il doit être compris que, lors de la rotation du récipient autour de son axe de symétrie vertical **X**, il apparaît, pour un récipient oval, une variation relative du diamètre en valeur absolue. La variation de diamètre se traduit par un déplacement de la face externe $2_1$ du récipient par rapport au point d'appui **11**. L'ovalisation $\Delta$ est définie comme l'écart entre le diamètre minimum du récipient et le diamètre maximum du récipient, représenté en traits interrompus sur la **fig. 4**. Cet écart $\Delta$ peut être exprimé de la manière suivante :

$$\Delta = D \text{ cosinus } (a).$$

L'ovalisation peut ainsi être déterminée à partir de la connaissance de l'angle d'incidence **a** et de la distance **D**. Il est à noter que le diamètre du récipient peut être mesuré par la technique selon l'invention.

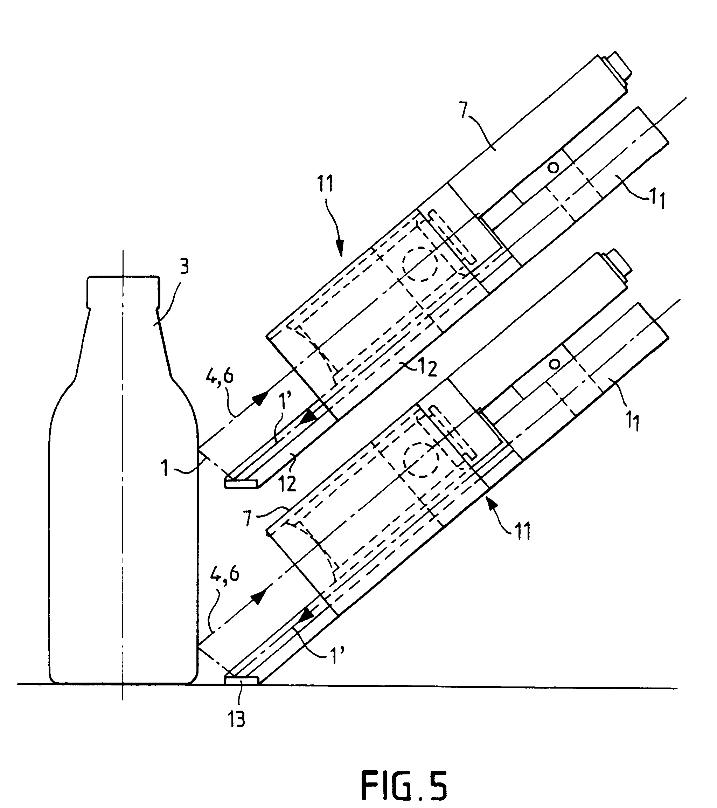

Les fig. **3** et **5** illustrent un exemple de réalisation d'un dispositif **11** de mesure de l'épaisseur de la paroi et/ou de l'ovalisation d'un récipient **3**, mettant en oeuvre le procédé selon l'invention décrit ci-dessus. Le dispositif de mesure **11** est conçu pour présenter un encombrement réduit, dans la mesure où il apparaît nécessaire de superposer deux ou trois dispositifs, afin de contrôler l'épaisseur de la paroi du récipient à plusieurs niveaux (**fig. 5**). Le dispositif de mesure **11** comporte la source lumineuse $1_1$, telle qu'un laser dont le boîtier $1_2$ est prolongé par un bras **12** dont l'extrémité est munie d'un miroir de renvoi **13**. Ainsi, le faisceau lumineux **1'** émis par la source **1₁** est réfléchi par le miroir **13**, en vue de former le faisceau incident **1**. Le faisceau lumineux **1'** émis par la source **1₁** et les faisceaux réfléchi **4** et réfracté **6** sont sensiblement parallèles, de sorte que la source lumineuse **1₁** et le capteur de mesure **7** sont inclinés dans le même sens, à savoir vers le bas dans l'exemple de réalisation illustré. De ce fait, le capteur de mesure **7** peut être associé ou placé à côté de la source lumineuse **1**, afin de limiter l'encombrement du dispositif **11**. Selon une caractéristique préférée de réalisation, le dispositif **11** comporte un second miroir de renvoi **15** placé dans le plan de symétrie **S**, de manière à récupérer les faisceaux réfléchi **4** et réfracté **6** et à les renvoyer latéralement en direction du capteur de mesure **7**. Dans l'exemple illustré, l'axe de visée **V** du capteur de mesure **7** forme avec le plan **S** un angle β de l'ordre de 40°, pris selon une section droite transversale considérée par rapport au récipient.

Dans la description préférée qui précède, le faisceau incident 1 est situé dans le plan de symétrie vertical **S** du récipient. Il est à noter que le faisceau incident **1**, tout en conservant son angle d'incidence **a**, peut être décalé dans le plan transversal **T** d'un angle limité par exemple de ± 15°. Dans le même sens, la barrette de mesure **9** est placée dans un plan parallèle au plan vertical **S**, selon l'exemple préféré de réalisation décrit ci-dessus. Bien entendu, la barrette de mesure **9** peut occuper une position différente en mettant en oeuvre un système optique particulier de renvoi des faisceaux réfléchi **4** et réfracté **6**.

Enfin, pour améliorer l'alignement de la caméra et de la source lumineuse **1₁**, il peut être prévu de placer un anamorphoseur devant la source lumineuse **1₁**.

L'invention n'est pas limitée aux exemples décrits et représentés, car diverses modifications peuvent y être apportées sans sortir de son cadre.

**Revendications**

1. Procédé optique de mesure de l'épaisseur (**E**) de la paroi (**2**) et/ou de l'ovalisation d'un récipient (**3**) au moins translucide et partiellement réfléchissant, comportant une face externe (**2₁**) et une face interne (**2₂**), le procédé consistant :

   - à envoyer un faisceau lumineux incident (**1**) sur la face externe (**2₁**) du récipient selon un angle d'incidence connu (**a**),
   - à disposer à distance du récipient (**3**), un capteur de mesure (**7**) composé d'une barrette de cellules photosensibles (**9**) et destiné à recueillir les faisceaux réfléchi (**4**) et réfracté (**6**) correspondant à la réflexion du faisceau incident, respectivement sur les faces externe et interne du récipient,

   - et à mesurer à l'aide du capteur (**7**), la distance (**D**) séparant les faisceaux réfléchi (**4**) et réfracté (**6**), afin de permettre de déterminer l'épaisseur de la paroi et/ou de l'ovalisation du récipient,

   caractérisé en ce qu'il consiste :

   - à envoyer le faisceau lumineux incident (**1**) de manière qu'il forme un angle d'incidence déterminé (**a**) par rapport à une section droite transversale (**T**) du récipient,
   - et à disposer le capteur de mesure (**7**), de façon qu'il récupère les faisceaux réfléchi (**4**) et réfracté (**6**) émis par le récipient selon deux sections droites transversales différentes (**T, T₁**).

2. Procédé selon la revendication 1, caractérisé en ce qu'il consiste :

   - à envoyer le faisceau lumineux incident (**1**), de manière qu'il soit sensiblement parallèle à l'une des génératrices (**G**) du récipient,
   - et à disposer la barrette de mesure (**9**) du capteur de façon à récupérer les faisceaux réfracté (**6**) et réfléchi (**4**) situés dans un plan (**S**) sensiblement parallèle à ladite génératrice du récipient.

3. Procédé selon la revendication 1 ou 2, caractérisé en ce qu'il consiste à envoyer le faisceau lumineux incident sur le récipient à l'aide d'un miroir de renvoi (**13**).

4. Dispositif de mesure de l'épaisseur de la paroi (**2**) et/ou de l'ovalisation d'un récipient (**3**) au moins translucide et partiellement réfléchissant comportant une face externe (**2₁**) et une face interne (**2₂**), du type comportant :

   - une source lumineuse (**1₁**) envoyant un faisceau incident (**1**) sur la face externe (**2₁**) du récipient,
   - un capteur de mesure (**7**) composé d'une barrette de cellules photosensibles (**9**) et destiné à recueillir les faisceaux réfléchi (**4**) et réfracté (**6**) correspondant respectivement à la réflexion du faisceau incident sur les faces externe et interne du récipient,
   - et des moyens de traitement des signaux délivrés par le capteur de mesure (**7**) et permettant de déterminer l'épaisseur de la paroi et/ou l'ovalisation du récipient,

   caractérisé en ce que la source lumineuse (**1₁**) est montée de manière à émettre un faisceau incident (**1**) formant un angle d'incidence (**a**) déterminé par rapport à une section droite transversale (**T**) du récipient, et en ce que le capteur de mesure (**7**) est monté de façon à récupérer les faisceaux réfléchi (**4**) et réfracté (**6**) émis par le récipient (**3**) selon deux sections droites transversales différentes (**T, T$_1$**).

5. Dispositif de mesure selon la revendication 4, caractérisé en ce que :

- la source lumineuse (**1$_1$**) est montée pour émettre un faisceau incident (**1**) sensiblement parallèle à l'une des génératrices (**G**) du récipient,
- et en ce que la barrette de mesure (**9**) du capteur est montée pour récupérer les faisceaux réfracté (**6**) et réfléchi (**4**) situés dans un plan (**S**) sensiblement parallèle à ladite génératrice du récipient.

6. Dispositif selon la revendication 4 ou 5, caractérisé en ce qu'il comporte un miroir (**13**) de renvoi en direction du récipient (**3**), du faisceau (**1'**) émis par la source lumineuse, de manière que la source lumineuse (**1$_1$**) et le capteur de mesure (**7**) se trouvent inclinés dans le même sens.

7. Dispositif selon la revendication 6, caractérisé en ce que le miroir de renvoi (**13**) est fixé à l'extrémité d'un bras (**12**) s'étendant à partir de la source lumineuse (**1$_1$**).

8. Dispositif selon la revendication 7, caractérisé en ce que le capteur de mesure (**7**) est décalé d'un angle ($\beta$) par rapport à la source lumineuse (**1$_1$**), de sorte que son axe de visée se trouve dirigé vers un deuxième miroir (**15**) de renvoi des faisceaux réfléchi (**4**) et réfracté (**6**).

9. Dispositif selon la revendication 7 ou 8, caractérisé en ce que la source lumineuse (**1$_1$**) est équipée d'un anamorphoseur.

FIG.1

FIG.2

β

1₁

FIG.3

7

V

15

8

12

13

A

3

B

2

S    X

1₁

Δ

21

X

3

11

FIG.4

FIG.5

Office européen
des brevets

**RAPPORT DE RECHERCHE EUROPEENNE**

Numéro de la demande

EP 98 42 0063

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | FR 2 069 220 A (BRITISH AIRCRAFT CORP LTD) 3 septembre 1971 * page 2, ligne 11 – page 3, ligne 15; revendication 6; figure * | 1,4 | G01B11/06 |
| A | WO 95 22740 A (SAINT GOBAIN CINEMATIQUE ;ZHANG JINGWEI (FR); GRENTE PASCAL (FR)) 24 août 1995 * abrégé; figure 1 * | 1,4 | |
| A | EP 0 248 552 A (TOLE WALTER ROLAND ;BETHAM RICHARD (GB)) 9 décembre 1987 * abrégé; figure 2 * | 1,4 | |
| A | FR 2 481 445 A (THOMSON CSF) 30 octobre 1981 * page 7, ligne 20 – page 8, ligne 34; figure 7 * | 1,4 | |
| A | EL-ZAIAT S Y: "MEASURING THE THICKNESS AND REFRACTIVE INDEX OF A THICK TRANSPARENT PLATE BY AN UNEXPANDED LASER BEAM" OPTICS AND LASER TECHNOLOGY, vol. 29, no. 2, mars 1997, pages 63-65, XP000684438 * le document en entier * | 1,4 | DOMAINES TECHNIQUES RECHERCHES (Int.Cl.6) G01B |
| A | DE 23 25 457 A (KALMAN GABOR UJHELYI) 29 novembre 1973 * page 10, ligne 10 – page 12, ligne 5; figure 3 * | 1,4 | |

Le présent rapport a été établi pour toutes les revendications

| Lieu de la recherche | Date d'achèvement de la recherche | Examinateur |
|---|---|---|
| LA HAYE | 11 août 1998 | Ganci, P |